# EUROPEAN PATENT SPECIFICATION

(11) **EP 1 705 549 B1**
(45) Date of publication and mention of the grant of the patent: **23.05.2007**
(21) Application number: 05102328.1
(22) Date of filing: 23.03.2005
(51) Int. Cl.: G06F 1/18

(54) **System and method for powering a peripheral device**
System und Verfahren zur Stromversorgung eines Peripheriegerätes
Système et procédé d'alimentation d'un dispositif périphérique

(43) Date of publication of application: 27.09.2006
(73) Proprietor: Research In Motion Limited, Waterloo, Ontario N2L 3W8 (CA)
(72) Inventor: Mak-Fan, David, N2K 4B1 Waterloo, Ontario (CA); Veselic, Dusan, L6M 3N7 Oakville, Ontario (CA); Matton, Max, N2L 1W6 Waterloo, Ontario (CA)
(74) Representative: Rickard, David John

(56) References cited:
- EP-A- 1 487 081
- US-A1- 2003 075 984
- US-A1- 2003 154 340

## Description

This invention relates to peripheral devices that can be connected to a computer, and more specifically to powering such peripheral devices.

Widespread peripheral devices that can be connected to a computer, such as personal data assistants (PDA), cell phones and printers, are powered by the computer to which they are connected, and/or are self-powered by their own power supply, typically a battery pack. When re-charging is necessary, the peripheral device with the battery pack contained therein, can be powered by a computer to re-charge the battery pack. A convenient method to power a PDA in a mobile setting, for example, involves the use of a laptop computer. If the PDA is running low on batteries in the field, the PDA can be connected to a battery-operated laptop computer for powering. If one power outlet is available, the computer can be plugged into the one outlet and the PDA can be connected to the computer to power the PDA for recharging the batteries and to provide power to the components of the PDA.

To make such a connection between a computer and a peripheral device, it is necessary to have installed in both the computer and the peripheral device appropriate software, known as a device driver, to establish and control the connection. Device drivers can be categorized according to the communication standard to which they adhere.

One category of device drivers adheres to the standard known as universal serial bus, better known by its acronym USB. Device drivers that are USB compliant are convenient because many personal computers (PCs) come with USB ports. USB permits many peripheral device connections at one time. Another convenient USB feature is that it distributes electrical power to many peripherals. USB lets the PC automatically sense the power that is required and deliver it to the device. USB "hot-swapping" obviates the need to shut down and restart the PC to attach or remove a peripheral device: the PC automatically detects the peripheral device and configures the necessary software. This feature is especially useful for users of multi-player games, as well as laptop PC users who want to share peripheral devices.

As convenient as USB is, however, one major drawback is that the maximum current that one USB port is allowed to supply to a peripheral device is limited to some maximum level, typically 100mA or 500mA. Thus, the rate at which battery packs can be recharged, and the types of devices that can run from the power supplied by a USB host device are curtailed.

### GENERAL

The present invention addresses the aforementioned drawback of limited available current from a USB port by exploiting the fact that a typical host device comes equipped with a plurality of USB ports. Thus, in one aspect, the invention provides a system for powering a peripheral device with a host device, the system comprising N host interface power ports, where N is an integer greater than one, each host interface power port adapted for coupling to a corresponding host port on the host device to deliver power to the peripheral device; a current adding unit for adding current received from the host device via the N host interface power ports to produce a total current; and a power terminal adapted for coupling to the peripheral device to send the total current from the current adding unit to the peripheral device. In an alternative aspect, the invention provides a system for powering a peripheral device with a host device, the system comprising N host interface power ports, where N is an integer greater than zero, and a host interface data port, each of said N host interface power ports and said host interface data port adapted for coupling to a corresponding host port on the host device to deliver power to the peripheral device; a current adding unit for adding current received from the host device via the N host interface power ports and the host interface data port to produce a total current; and a power terminal adapted for coupling to the peripheral device to send the total current from the current adding unit to the peripheral device.

### BRIEF DESCRIPTION OF THE DRAWINGS

For a better understanding of the present invention and to show more clearly how it may be carried into effect, reference will now be made, by way of example, to the accompanying drawings, in which:

Figure 1 shows a block diagram of a system for powering a peripheral device, in accordance with an embodiment of the invention;

Figure 2 shows the control logic unit and the current adding unit of the system of Figure 1; and

Figure 3 shows a block diagram of another embodiment of a system for powering a peripheral device.

### Description of preferred Embodiments

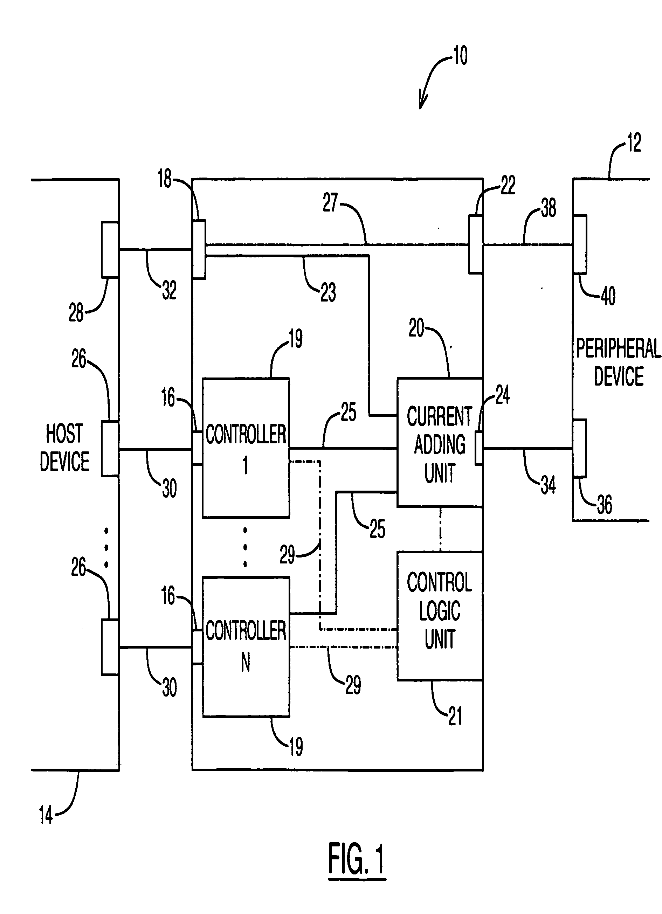

Figure 1 shows a system 10 for powering a peripheral device 12 with a host device 14. The system 10 includes N host interface power ports 16, where N is any integer greater than zero, a host interface data port 18, N microcontrollers 19, a current adding unit 20, a control logic unit 21, a data terminal 22, a power connection 23, a power terminal 24 and N power connections 25, a data connection 27 and N data connections 29.

Each of the N host interface power ports 16 is coupled to a corresponding host port 26 on the host device 14 to deliver power to the peripheral device 12. For example, the N host power ports 26 can be universal serial bus (USB) ports that exchange data with and deliver power to the N host interface power ports 16 in conformity with the USB standard. The N host interface power ports 16 are coupled to the N host power ports 26 via cables 30. Power received by the N host interface power ports 16 from the host device 14 is delivered to the peripheral device 12, as described below.

The host interface data port 18 is coupled to a host data port 28 on the host device 14 to exchange data between the host device 14 and the peripheral device 12. In particular, data received by the host interface data port 18 is transmitted to the data terminal 22, and then to the peripheral device data port 40. In the embodiment shown, the host interface data port 18 can also receive current from the host data port 28 for powering the peripheral device 12. This current can be delivered to the current adding unit 20 by the power connection 23.

The host data port 28 can be similar to the N host power ports 26. For example, the host data port 28 can be a USB port that exchanges data with and delivers power to the host interface data port 18 in conformity with the USB standard. The host interface data port 18 can be coupled to the host data port 28 via a cable 32. Data and power received by the host interface data port 18 from the host device 14 is delivered to the peripheral device 12, as described below.

Each of the N host interface power ports 16 is coupled to a corresponding microcontroller 19. Each of the N microcontrollers 19 is enumerated by the host device 14 via the respective N host interface power ports 16. The enumeration allows the system 10 to draw current from each of the N host power ports 26 of the host device 14. In particular, as part of the enumeration process, the N microcontrollers 19 identify themselves to the host device 14 and negotiate the maximum current that can be drawn therefrom. The current received by the N microcontrollers 19 from the host device 14 is delivered to the current adding unit 20 via respective N connections 25.

The current adding unit 20 adds current received from the host device 14 via the N host interface power ports 16 and the N microcontrollers 19. In those embodiments in which the host interface data port 18 draws current from the host device 14, like the embodiment shown in Figure 1, the current adding unit 20 also adds current received from the host interface data port 18 via a power connection 23 to produce a total current. Thus, the total current is the current produced by the current adding unit 20 by adding current received from the N host interface power ports 16 and the host interface data port 18.

The data terminal 22 of the system 10 is connected to the peripheral device 12 by a data cable 38. Data flows along a path that starts at the host data port 28, travels along the cable 32, crosses the host interface data port 18, travels along the data connection 27, crosses the data terminal 22, and travels along the data cable 38 to the peripheral device data port 40. In one embodiment, the power cable 34 and the data cable 38 are one in the same, and can deliver both power and data. In such case, the data terminal 22 and the power terminal 24 are coincident, as are the peripheral device power port 36 and the peripheral device data port 40.

The system 10 can also include a control logic unit 21 that is coupled to the N microcontrollers 19 for configuring the current adding unit 20 to produce a maximum total current that is available to the peripheral device. The available maximum total current depends on the maximum current that each of the N microcontrollers 19 negotiates with the host device 14. Thus, the control logic unit 21 uses enumeration information obtained by the N microcontrollers 19 from the host device 14 and delivered to the control logic unit 21 by the respective N data connections 29. This enumeration information is used by the control logic unit 21 to configure the current adding unit 20 for delivery of the maximum total current available to the peripheral device 12. This maximum total current dictates the speed at which the peripheral device 12 can be charged by the host device 14, for example. If the maximum total current available should change, as the N host interface power ports 16 are disconnected and reconnected, the control logic unit 21 reconfigures the current adding unit 20 accordingly. The maximum rate at which the host device 14 can charge the peripheral device 12 can correspondingly change.

In one embodiment, the total current that is delivered from the current adding unit 20 to the peripheral device 12 fluctuates as a function of time according to the demands of the peripheral device 12. The maximum total current is set by the control logic unit 21 according to what was negotiated between the N microcontrollers 19 and the host device 14 during the enumeration process, as described in more detail below.

The system 10 allows the total current delivered to the peripheral device 12 to be larger than could be delivered from the host interface data port 18 alone. For example, if each one of the N host interface power ports 16 and the host interface data port 18 is constrained by the USB standard to deliver a maximum of 500mA of current, then the current adding unit 20 adds the individual currents to make available a maximum total current of (N+1)x500mA to the peripheral device 12, instead of just 500mA from the one host data port 28. To deliver this current to the peripheral device 12, the current adding unit 20 sends this maximum total current to the power terminal 24, which is coupled to the peripheral device 12 by a power cable 34. From the power terminal 24, the total current is delivered to the peripheral device 12 via the power cable 34 at a peripheral device power port 36.

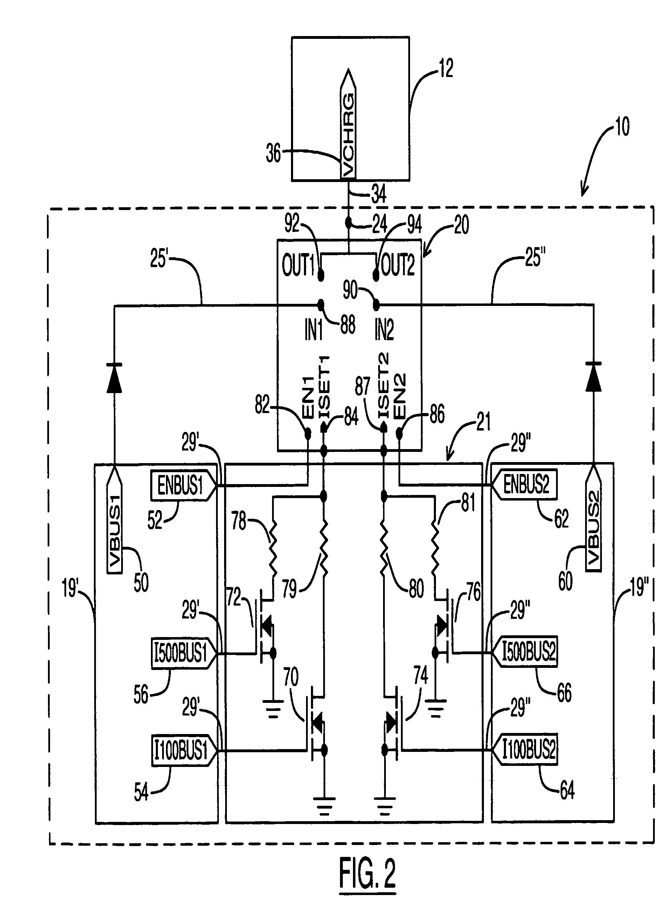

Figure 2 shows the current adding unit 20 and the control logic unit 21 of the system 10 of Figure 1. Also shown in Figure 2 are N=2 microcontrollers 19' and 19". (In Figure 1, all N microcontrollers are labeled by the reference 19, whereas in Figure 2, the N=2 microcontrollers are distinguished by the use of primes 19' and 19", and similarly for the N data connections and the N power connections.). This number of microcontrollers is exemplary only, as N can be any integer greater than zero. The processor 19' includes a VBUS1 terminal 50, an ENbus1 terminal 52, an I100bus1 terminal 54 and an 1500busl terminal 56. Likewise, the processor 19" includes a VBUS2 terminal 60, an ENbus2 terminal 62, an I100bus2 terminal 64 and an I500bus2 terminal 66.

The I100bus1 terminal 54 is coupled to a first FET 70 of the control logic unit 21, and the 1500busl terminal 56 is coupled to a second FET 72 of the control logic unit 21. The I100bus2 terminal 64 is coupled to a third FET 74 of the control logic unit 21, and the I500bus2 terminal 66 is coupled to a fourth FET 76 of the control logic unit 21. The control logic unit 21 further includes four resistors 78-81.

The current adding unit 20 includes an EN1 terminal 82 coupled to the ENbus1 terminal 52, and an Iset1 terminal 84 coupled to the first and second FETs 70 and 72. The current adding unit 20 also includes an EN2 terminal 86 coupled to the ENbus2 terminal 62, and an lset2 terminal 87 coupled to the third and fourth FETs 74 and 76. The current adding unit 20 further includes an in1 terminal 88 and an in2 terminal 90 respectively coupled to the VBUS1 terminal 50 and the VBUS2 terminal 60, via respective power connections 25' and 25". An out1 terminal 92 and an out2 terminal 94 of the current adding unit are coupled to the power terminal 24.

During enumeration, the microcontrollers 19' and 19" negotiate the maximum current that each can draw from the host device 14 via the N host power ports 26 and the N host interface power ports 16 to which they are coupled. If the N host power ports 26 are USB ports, then typically the host device 14 offers a choice of two maximum currents, 100mA and 500mA. If the microcontrollers 19' and 19" negotiate for a maximum current of 100mA each, then respective voltages are asserted on the I100bus1 terminal 54 and the I100bus2 terminal 64 via the data connections 29' and 29", which close the gates on the first and third FETS 70 and 74. These steps result in a voltage being applied at the Iset1 terminal 84 and at the Iset2 terminal 87 that configure the current adding unit 20 for producing a maximum total current from the microcontrollers 19' and 19" of 200mA.

If, instead, the microcontrollers 19' and 19" negotiate for a maximum current of 500mA each, then respective voltages are asserted on the I500bus1 terminal 56 and the I500bus2 terminal 66, which close the gates on the second and fourth FETS 72 and 76. These steps result in a voltage being applied at the Iset1 terminal 84 and at the lset2 terminal 87 that configure the current adding unit 20 for producing a maximum total current from the microcontrollers 19 and 19' of 1000mA.

The microcontroller 19' asserts a voltage at the EN1 terminal 82, via the ENbus1 terminal 52 and the data connection 29', to allow the current adding unit 20 to draw current from the microcontroller 19' for the peripheral device 12. In particular, when the voltage is asserted at the EN1 terminal 82, a current pathway is established between the in1 terminal 88 and the out1 terminal 92 that permits current to flow from the host device 14 to the peripheral device 12. Likewise, the microcontroller 19" asserts a voltage at the EN2 terminal 86, via the ENbus1 terminal 62 and the data connection 29", to allow the current adding unit 20 to draw current from the microcontroller 19" for the peripheral device 12. In particular, when the voltage is asserted at the EN2 terminal 86, a current pathway is established between the in1 terminal 90 and the out1 terminal 94 that permits current to flow from the host device 14 to the peripheral device 12.

When the EN1 terminal 82 and the EN2 terminal 86 are asserted, a maximum total current, whose value depends on the maximum currents negotiated by the microcontrollers 19' and 19" during enumeration, is available to the peripheral device 12. If the maximum amount of current negotiated by each of the microcontrollers 19' and 19" is 500mA, then the maximum total current available from the microcontrollers 19' and 19" is 1000mA. In addition, the peripheral device 12 negotiates with the host device 14 the maximum current available from the host data port 28 (not shown if Figure 2), which is coupled to the host interface data port 18 (not shown in Figure 2) of the system 10. If the host data port 28 can provide a maximum current of 500mA, then the total maximum current available to the peripheral device 12 from the host device 14 is 1500mA. This can be favorably compared to only 500mA if the peripheral device 12 could only draw current from the one host data port 28. It should be understood that 1500mA is the *maximum* current that can be drawn by the peripheral device in this example. At any particular time, the current drawn by the peripheral device 12 from the host device 14 can be less than this maximum since USB permits the N host power ports 26 and the host data port 28 to supply current on demand up to some maximum current per port, which in this example is 500mA.

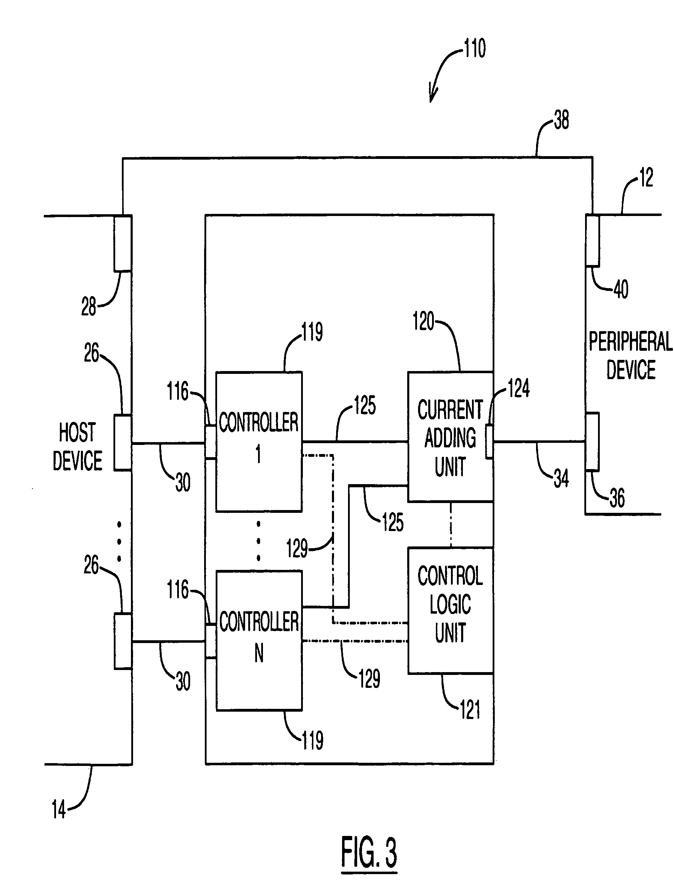

In Figure 3, a different embodiment of a system 110 for powering a peripheral device 12 with a host device 14 is shown. The system 110 includes N host interface power ports 116, where N is any integer greater than one, N microcontrollers 119, a current adding unit 120, a control logic unit 121, and a power terminal 124. Unlike the embodiment shown in Figure 1, the host data port 28 of the host device 14 is directly connected to the peripheral device data port 40 with the data cable 38, instead of connected to the peripheral device data port 40 indirectly via the system 10. Thus, internal connections similar to 23 and 27 are not required. The host data port 28 can transfer data and power to the peripheral device 12, but, as mentioned above, in some implementations, the transfer of power can be reserved for the N host power ports 26.

Each of the N host interface power ports 116 is coupled to a corresponding host port 26 on the host device 14 to deliver power to the peripheral device 12. For example, the N host power ports 26 can be universal serial bus (USB) ports that exchange data with and deliver power to the N host interface power ports 116 in conformity with the USB standard. The N host interface power ports 116 are coupled to the N host power ports via cables 30. Power received by the N host interface power ports 116 from the host device 14 is delivered to the peripheral device 12.

The host data port 28 on the host device 14 is connected to a peripheral device data port 40 on the peripheral device 12 via the data cable 38 to allow data to be exchanged there between. The data cable 38 can also carry current from the host device 14 to the peripheral device 12 for powering the peripheral device 12, as mentioned above. The host data port 28 can be similar to the N host power ports 26. For example, the host data port 28 can be a USB port that exchanges data with the peripheral device data port 40 in conformity with the USB standard.

Each of the N host interface power ports 116 is coupled to a corresponding microcontroller 119. Each of the N microcontrollers 119 is enumerated by the host device 14 via the respective N host interface power ports 116. The enumeration allows the system 110 to draw current from each of the N host power ports 126 of the host device 14. In particular, as part of the enumeration process, the N microcontrollers 119 can negotiate the maximum amount of current that can be drawn from the respective N host power ports 26. The current received by the microcontrollers 119 from the host device 14 is delivered to the current adding unit 120 via N power connections 125.

The current adding unit 120 adds current received from the host device 14 via the N host interface power ports 116 and the N microcontrollers 119. The system 110 also includes a control logic unit 121 coupled to the N host interface power ports 116, via the N microcontrollers 119 and respective N data connections 129, to configure the current adding unit 120. The control logic unit 121 and the current adding unit 120 are similar to the control logic unit 21 and current adding unit 20, which were described in detail above.

Advantageously, the system 110 allows the maximum allowed current from each of the N host power ports 26 to be delivered to the peripheral device 12, in addition to whatever current from the one host data port 28 is available. The peripheral device 12 can thus be charged by the host device 14 at a faster rate. In addition, the host device 14 can power peripheral devices 12 requiring currents larger than can be supplied by just the one host data port 28.

It should be understood that various modifications could be made to the embodiments described and illustrated herein, without departing from the present invention, the scope of which is defined in the appended claims. For example, although emphasis has been placed on PDAs, other peripheral devices can benefit from the principles of the present invention.

## Claims

1. A system (10) for powering a peripheral device (12) with a host device (14), the system comprising:
N host interface power ports (16), where N is an integer greater than one, each host interface power port adapted for coupling to a corresponding host port (26) on the host device to deliver power to the peripheral device;
a current adding unit (20) for adding current received from the host device via the N host interface power ports (16) to produce a total current; and
a power terminal (24) adapted for coupling to the peripheral device to send the total current from the current adding unit to the peripheral device.

2. The system (10) of claim 1, wherein the system further comprises a host interface data port (18).

3. The system (10) of claim 1or claim 2, further comprising N microcontrollers(19), each microcontroller being coupled to a corresponding one of the N host interface power ports (16), wherein the N microcontrollers are adapted to communicate with the host device (14) for enumeration.

4. The system (10) of claim 3, wherein the N microcontrollers (19) are adapted for communication with the host device (14) under a Universal Serial Bus (USB) standard.

5. The system of claim 3 or claim 4, further comprising a control logic unit (21) coupled to the N microcontrollers (19) and/or the current adding unit (20) for configuring the current adding unit to produce a maximum total current that is available to the peripheral device (12) based on the enumeration.

6. The system (10) of claim 2 or any one of claims 3 to 5 when dependent on claim 2, wherein the host interface data port (18) is adapted for coupling to a host data port (28) on the host device (14) to exchange data between the host device and the peripheral device (12); and wherein the system further comprises a data terminal (22) adapted for coupling to the peripheral device to exchange data between the host device and the peripheral device via the host interface data port.

7. A method for powering a peripheral device (12) with a host device (14), the method comprising:
providing an interface system (10) having N host interface power ports (16), where N is an integer greater than one, and a power terminal (24);
connecting each of the N host interface power ports to a corresponding host port (26) on the host device to deliver power to the peripheral device;
the interface system adding current received from the host device via the N host interface power ports to produce a total current; and
connecting the power terminal to the peripheral device to send the total current from the interface system to the peripheral device.

8. The method of claim 7, wherein the system is provided with a host interface data port (18).

9. The method of claim 7 or claim 8, wherein the interface system (10) comprises N microcontrollers (19), the method further comprising coupling each microcontroller to a corresponding one of the N host interface power ports (16) for enumeration.

10. The method of claim 9, further comprising the host device (14) enumerating the N microcontrollers (19) via the N host interface power ports (16).

11. The method of any one of claims 7 to 10, further comprising configuring a current adding unit (20) of the interface system (10) to produce a maximum total current that is available to the peripheral device (12).

12. The method of claim 9 or claim 10, further comprising the host device (14) communicating with the N microcontrollers (19) under a Universal Serial Bus standard.

13. The method of claim 8 or any one of claims 9 to 12 when dependent on claim 8 wherein the interface system (10) further comprises a data terminal (22), the method further comprising:
connecting the host interface data port (18) to a host data port (28) on the host device (14) to exchange data between the host device and the peripheral device (12); and
connecting the data terminal (22) to the peripheral device to exchange data between the host device and the peripheral device via the host interface data port.

14. A combination of a host device (14) and a peripheral device (12), said host device and peripheral device being coupled to each other by the system (10) of any one of claims 1 to 6.

15. The combination of claim 14, wherein the host device comprises a computer and the peripheral device comprises any of a cell phone, a personal digital assistant or a printer.

16. A machine readable medium comprising program code means for a logic controller and/or microcontrollers (19) of the system (10) of any one of claims 1 to 6, said program code means when executed causing the system to implement the method of any one of claims 7 to 13.

17. A system (10) for powering a peripheral device (12) with a host device (14), the system comprising:
N host interface power ports (16), where N is an integer greater than zero, and a host interface data port (18), each of said N host interface power ports and said host interface data port adapted for coupling to a corresponding host port (26, 28) on the host device to deliver power to the peripheral device;
a current adding unit (20) for adding current received from the host device via the N host interface power ports (16) and the host interface data port (18) to produce a total current; and
a power terminal (24) adapted for coupling to the peripheral device to send the total current from the current adding unit to the peripheral device.

18. The system (10) of claim 17, where N is an integer greater than one.

19. The system (10) of claim 17 or claim 18, further comprising N microcontrollers (19), each microcontroller being coupled to a corresponding one of the N host interface power ports (16), wherein the N microcontrollers are adapted to communicate with the host device (14) for enumeration.

20. The system (10) of claim 19, wherein the N microcontrollers (19) are adapted for communication with the host device (14) under a Universal Serial Bus (USB) standard.

21. The system of claim 19 or claim 20, further comprising a control logic unit (21) coupled to the N microcontrollers (19) and/or the current adding unit (20) for configuring the current adding unit to produce a maximum total current that is available to the peripheral device (12) based on the enumeration.

22. The system (10) of any one of claims 17 to 21, wherein the host interface data port (18) is adapted for coupling to a host data port (28) on the host device (14) to exchange data between the host device and the peripheral device (12); and wherein the system further comprises a data terminal (22) adapted for coupling to the peripheral device to exchange data between the host device and the peripheral device via the host interface data port.

23. A method for powering a peripheral device (12) with a host device (14), the method comprising:
providing an interface system (10) having N host interface power ports (16), where N is an integer greater than zero, and a host interface data port (18), and a power terminal (24);
connecting each of the N host interface power ports (16) and the host interface data port (18) to a corresponding host port (26, 28) on the host device to deliver power to the peripheral device;
the interface system adding current received from the host device via the N host interface power ports (16) and the host interface data port (18) to produce a total current; and
connecting the power terminal to the peripheral device to send the total current from the interface system to the peripheral device.

24. The method of claim 23, further comprising providing the interface system (10) with N host interface power ports (16), where N is an integer greater than one.

25. The method of claim 23 or claim 24, wherein the interface system (10) comprises N microcontrollers (19), the method further comprising coupling each microcontroller to a corresponding one of the N host interface power ports (16) for enumeration.

26. The method of claim 25, further comprising the host device (14) enumerating the N microcontrollers (19) via the N host interface power ports (16).

27. The method of any one of claims 23 to 26, further comprising configuring a current adding unit (20) of the interface system (10) to produce a maximum total current that is available to the peripheral device (12).

28. The method of claim 25 or claim 26, further comprising the host device (14) communicating with the N microcontrollers (19) under a Universal Serial Bus standard.

29. The method of any one of claims 23 to 28, wherein the interface system (10) further comprises a data terminal (22), the method further comprising
connecting the host interface data port (18) to a host data port (28) on the host device (14) to exchange data between the host device and the peripheral device (12); and
connecting the data terminal (22) to the peripheral device to exchange data between the host device and the peripheral device via the host interface data port.

30. A combination of a host device (14) and a peripheral device (12), said host device and peripheral device being coupled to each other by the system (10) of any one of claims 17 to 22.

31. The combination of claim 30, wherein the host device comprises a computer and the peripheral device comprises any of a cell phone, a personal digital assistant or a printer.

32. A machine readable medium comprising program code means for a logic controller and/or microcontrollers (19) of the system (10) of any one of claims 17 to 22, said program code means when executed causing the system to implement the method of any one of claims 23 to 29.

## Patentansprüche

1. System (10) zur Stromversorgung einer Peripherievorrichtung (12) mit einer Hostvorrichtung (14), das System umfassend:
N Hostschnittstellen-Stromversorgungsanschlüsse (16), wobei N eine Ganzzahl größer als Eins ist und jeder Hostschnittstellen-Stromversorgungsanschluss zum Koppeln an einen entsprechenden Hostanschluss (26) an der Hostvorrichtung angepasst ist, um die Peripherievorrichtung mit Strom zu versorgen;
Stromsummiereinheit (20) zum Summieren von Strom, welcher von der Hostvorrichtung über die N Hostschnittstellen-Stromversorgungsanschlüsse (16) zum Erzeugen eines Gesamtstroms erhalten wurde;
Stromversorgungsanschluss (24), angepasst zum Koppeln an die Peripherievorrichtung, um den Gesamtstrom von der Stromsummiereinheit zur Peripherievorrichtung zu übertragen.

2. System (10) nach Anspruch 1, wobei das System weiterhin einen Hostschnittstellen-Datenanschluss (18) umfasst.

3. System (10) nach Anspruch 1 oder Anspruch 2, weiterhin umfassend N Mikrocontroller (19), wobei jeder Mikrocontroller an einen entsprechenden Mikrocontroller der N Hostschnittstellen-Stromversorgungsanschlüsse (16) gekoppelt ist und die N Mikrocontroller zum Kommunizieren mit der Hostvorrichtung (14) für die Zählung angepasst sind.

4. System (10) nach Anspruch 3, wobei die N Mikrocontroller (19) für die Kommunikation mit der Hostvorrichtung (14) gemäß eines Universal-Serial-Bus (USB)-Standards angepasst sind.

5. System nach Anspruch 3 oder Anspruch 4, weiterhin umfassend eine Steuerlogikeinheit (21), welche an die N Mikrocontroller (19) und/oder die Stromsummiereinheit (20) zum Konfigurieren der Stromsummiereinheit gekoppelt ist zwecks Erzeugung eines maximalen Gesamtstroms, der der Peripherievorrichtung (12) entsprechend der Zählung zur Verfügung steht.

6. System (10) nach Anspruch 2 oder einem der Ansprüche 3 bis 5, wenn abhängig von Anspruch 2, wobei der Hostschnittstellen-Datenanschluss (18) zum Koppeln an einen Hostdatenanschluss (28) an der Hostvorrichtung (14) zum Austauschen von Daten zwischen der Hostvorrichtung und der Peripherievorrichtung (12) angepasst ist; und wobei das System weiterhin einen Datenanschluss (22) umfasst, der zum Koppeln an die Peripherievorrichtung zum Austauschen von Daten zwischen der Hostvorrichtung und der Peripherievorrichtung über den Hostschnittstellen-Datenanschluss angepasst ist.

7. Verfahren zur Stromversorgung einer Peripherievorrichtung (12) mit einer Hostvorrichtung (14), das Verfahren umfassend:
Bereitstellen eines Schnittstellensystems (10), das N Hostschnittstellen-Stromversorgungsanschlüsse (16) aufweist, wobei N eine Ganzzahl größer als Eins ist, und einen Stromversorgungsanschluss aufweist (24);
Verbinden der N Hostschnittstellen-Stromversorgungsanschlüsse mit einem entsprechenden Hostanschluss (26) an der Hostvorrichtung zum Versorgen der Peripherievorrichtung mit Strom;
Schnittstellensystem, welches den von der Hostvorrichtung über die N Hostschnittstellen-Stromversorgungsanschlüsse erhaltenen Strom zum Erzeugen eines Gesamtstroms summiert; und
Verbinden des Stromversorgungsanschlusses mit der Peripherievorrichtung zum Übertragen des Gesamtstroms vom Schnittstellensystem zur Peripherievorrichtung.

8. Verfahren nach Anspruch 7, wobei das System mit einem Hostschnittstellen-Datenanschluss (18) ausgestattet ist.

9. Verfahren nach Anspruch 7 oder Anspruch 8, wobei das Schnittstellensystem (10) N Mikrocontroller (19) umfasst und das Verfahren weiterhin das Koppeln jedes Mikrocontrollers an einen entsprechenden Mikrocontroller der N Hostschnittstellen-Stromversorgungsanschlüsse (16) für die Zählung umfasst.

10. Verfahren nach Anspruch 9, weiterhin umfassend die Hostvorrichtung (14), welche die N Mikrocontroller (19) über die N Hostschnittstellen-Stromversorgungsanschlüsse (16) zählt.

11. Verfahren nach einem der Ansprüche 7 bis 10, weiterhin umfassend das Konfigurieren einer Stromsummiereinheit (20) des Schnittstellensystems (10) zum Erzeugen eines maximalen Gesamtstroms, welcher der Peripherievorrichtung (12) zur Verfügung steht.

12. Verfahren nach Anspruch 9 oder Anspruch 10, weiterhin umfassend die Hostvorrichtung (14), welche mit den N Mikrocontrollern (19) gemäß eines Universal-Serial-Bus-Standards kommuniziert.

13. Verfahren nach Anspruch 8 oder einem der Ansprüche 9 bis 12, wenn abhängig von Anspruch 8, wobei das Schnittstellensystem (10) weiterhin einen Datenanschluss (22) umfasst, und das Verfahren weiterhin umfasst:
Verbinden des Hostschnittstellen-Datenanschlusses (18) mit einem Hostdatenanschluss (28) an der Hostvorrichtung (14) zum Austauschen von Daten zwischen der Hostvorrichtung und der Peripherievorrichtung (12); und
Verbinden des Datenanschlusses (22) mit der Peripherievorrichtung zum Austauschen von Daten zwischen der Hostvorrichtung und der Peripherievorrichtung über den Hostschnittstellen-Datenanschluss.

14. Kombination einer Hostvorrichtung (14) und einer Peripherievorrichtung (12), wobei die Hostvorrichtung und die Peripherievorrichtung miteinander durch das System (10) nach einem der Ansprüche 1 bis 6 verkoppelt sind.

15. Kombination nach Anspruch 14, wobei die Hostvorrichtung einen Computer umfasst und die Peripherievorrichtung ein Mobiltelefon, einen Personal Digital Assistant oder einen Drucker umfasst.

16. Maschinenlesbares Medium umfassend Programmcodemittel für einen Logikcontroller und/oder Mikrocontroller (19) des Systems (10) nach einem der Ansprüche 1 bis 6, wobei das Programmcodemittel, wenn ausgeführt, das System dazu veranlasst, das Verfahren einer der Ansprüche 7 bis 13 zu implementieren.

17. System (10) zur Stromversorgung einer Peripherievorrichtung (12) mit einer Hostvorrichtung (14), das System umfassend:
N Hostschnittstellen-Stromversorgungsanschlüsse (16), wobei N eine Ganzzahl größer als Null ist, und einen Hostschnittstellen-Datenanschluss (18), wobei jeder der N Hostschnittstellen-Stromversorgungsanschlüsse und der Hostschnittstellen-Datenanschluss zum Koppeln an einen entsprechenden Hostanschluss (26, 28) an der Hostvorrichtung gekoppelt ist zur Versorgung der Peripherievorrichtung mit Strom;
Stromsummiereinheit (20) zum Summieren von Strom, der von der Hostvorrichtung über die N Hostschnittstellen-Stromversorgungsanschlüsse (16) und den Hostschnittstellen-Datenanschluss (18) zum Erzeugen eines Gesamtstroms erhalten wurde; und
Stromversorgungsanschluss (24) angepasst zum Koppeln an die Peripherievorrichtung, um den Gesamtstrom von der Stromsummiereinheit zu der Peripherievorrichtung zu übertragen.

18. System (10) nach Anspruch 17, wobei N eine Ganzzahl größer als Eins ist.

19. System (10) nach Anspruch 17 oder Anspruch 18, weiterhin umfassend N Mikrocontroller (19), wobei jeder Mikrocontroller an einen entsprechenden Mikrocontroller der N Hostschnittstellen-Stromversorgungsanschlüsse (16) gekoppelt ist, und die N Mikrocontroller zum Kommunizieren mit der Hostvorrichtung (14) für die Zählung angepasst sind.

20. System (10) nach Anspruch 19, wobei die N Mikrocontroller (19) zur Kommunikation mit der Hostvorrichtung (14) gemäß eines Universal-Serial-Bus (USB)-Standards angepasst sind.

21. System nach Anspruch 19 oder Anspruch 20, weiterhin umfassend eine Steuerlogikeinheit (21), die an die N Mikrocontroller (19) und/oder die Stromsummiereinheit (20) zum Konfigurieren der Stromsummiereinheit gekoppelt ist, um einen maximalen Gesamtstrom zu erzeugen, welcher der Peripherievorrichtung (12) auf der Grundlage der Zählung zur Verfügung steht.

22. System (10) nach einem der Ansprüche 17 bis 21, wobei der Hostschnittstellen-Datenanschluss (18) zum Koppeln an einen Hostdatenanschluss (28) an der Hostvorrichtung (14) zum Austauschen von Daten zwischen der Hostvorrichtung und der Peripherievorrichtung angepasst ist (12); und wobei das System weiterhin einen Datenanschluss (22) umfasst, der zum Koppeln an die Peripherievorrichtung angepasst ist zum Austauschen von Daten zwischen der Hostvorrichtung und der Peripherievorrichtung über den Hostschnittstellen-Datenanschluss.

23. Verfahren zur Stromversorgung einer Peripherievorrichtung (12) mit einer Hostvorrichtung (14), das Verfahren umfassend:
Bereitstellen eines Schnittstellensystems (10), welches N Hostschnittstellen-Stromversorgungsanschlüsse (16) aufweist, wobei N eine Ganzzahl größer als Null ist, und einen Hostschnittstellen-Datenanschluss (18) sowie einen Stromversorgungsanschluss (24) aufweist;
Verbinden der N Hostschnittstellen-Stromversorgungsanschlüsse (16) und des Hostschnittstellen-Datenanschlusses (18) mit einem entsprechenden Hostanschluss (26, 28) an der Hostvorrichtung zum Versorgen der Peripherievorrichtung mit Strom;
Schnittstellensystem, das den von der Hostvorrichtung über die N Hostschnittstellen-Stromversorgungsanschlüsse (16) und den Hostschnittstellen-Datenanschluss (18) erhaltenen Strom zum Erzeugen eines Gesamtstroms summiert; und
Verbinden des Stromversorgungsanschlusses mit der Peripherievorrichtung, um den Gesamtstrom vom Schnittstellensystem zu der Peripherievorrichtung zu übertragen.

24. Verfahren nach Anspruch 23, weiterhin umfassend das Ausstatten des Schnittstellensystems (10) mit N Hostschnittstellen-Stromversorgungsanschlüssen (16), wobei N eine Ganzzahl größer als Eins ist.

25. Verfahren nach Anspruch 23 oder Anspruch 24, wobei das Schnittstellensystem (10) N Mikrocontroller (19) umfasst, und das Verfahren weiterhin das Koppeln jedes Mikrocontrollers an einen entsprechenden Mikrocontroller der N Hostschnittstellen-Stromversorgungsanschlüsse (16) für die Zählung umfasst.

26. Verfahren nach Anspruch 25, weiterhin umfassend die Hostvorrichtung (14), die die N Mikrocontroller (19) über die N Hostschnittstellen-Stromversorgungsanschlüsse (16) zählt.

27. Verfahren nach einem der Ansprüche 23 bis 26, weiterhin umfassend das Konfigurieren einer Stromsummiereinheit (20) des Schnittstellensystems (10) zum Erzeugen eines maximalen Gesamtstroms, welcher der Peripherievorrichtung (12) zur Verfügung steht.

28. Verfahren nach Anspruch 25 oder Anspruch 26, weiterhin umfassend die Hostvorrichtung (14), welche mit den N Mikrocontrollern (19) gemäß eines Universal-Serial-Bus-Standards kommuniziert.

29. Verfahren nach einem der Ansprüche 23 bis 28, wobei das Schnittstellensystem (10) weiterhin einen Datenanschluss (22) umfasst und das Verfahren weiterhin umfasst
Verbinden des Hostschnittstellen-Datenanschlusses (18) mit einem Hostdatenanschluss (28) an der Hostvorrichtung (14) zum Austauschen von Daten zwischen der Hostvorrichtung und der Peripherievorrichtung (12); und
Verbinden des Datenanschlusses (22) mit der Peripherievorrichtung zum Austauschen von Daten zwischen der Hostvorrichtung und der Peripherievorrichtung über den Hostschnittstellen-Datenanschluss.

30. Kombination einer Hostvorrichtung (14) und einer Peripherievorrichtung (12), wobei die Hostvorrichtung und die Peripherievorrichtung miteinander durch das System (10) nach einem der Ansprüche 17 bis 22 verkoppelt sind.

31. Kombination nach Anspruch 30, wobei die Hostvorrichtung einen Computer umfasst und die Peripherievorrichtung ein Mobiltelefon, einen Personal Digital Assistant oder einen Drucker umfasst.

32. Maschinenlesbares Medium umfassend Programmcodemittel für einen Logikcontroller und/oder Mikrocontroller (19) des Systems (10) nach einem der Ansprüche 17 bis 22, wobei das Programmcodemittel, wenn ausgeführt, das System dazu veranlasst, das Verfahren einer der Ansprüche 23 bis 29 zu implementieren.

## Revendications

1. Système (10) d'alimentation d'un dispositif périphérique (12) avec un dispositif hôte (14), le système comprenant :
N ports d'alimentation d'interface hôte (16), N étant un nombre entier supérieur à un, chaque port d'alimentation d'interface hôte étant conçu pour être couplé à un port hôte (26) correspondant sur le dispositif hôte pour livrer l'énergie au dispositif périphérique ;
une unité d'ajout de courant (20) destinée à ajouter du courant reçu du dispositif hôte via les N ports d'alimentation d'interface hôte (16) pour produire un courant total ; et
une borne d'alimentation (24) conçue pour être couplée au dispositif périphérique pour envoyer le courant total de l'unité d'ajout de courant au dispositif périphérique.

2. Système (10) selon la revendication 1, dans lequel le système comprend en outre un port de données d'interface hôte (18).

3. Système (10) selon la revendication 1 ou la revendication 2, comprenant en outre N microcontrôleurs (19), chaque microcontrôleur étant couplé à un port correspondant parmi les N ports d'alimentation d'interface hôte (16), dans lequel les N microcontrôleurs sont conçus pour communiquer avec le dispositif hôte (14) pour l'énumération.

4. Système (10) selon la revendication 3, dans lequel les N microcontrôleurs (19) sont conçus pour communiquer avec le dispositif hôte (14) sous une norme bus série universel (USB).

5. Système selon la revendication 3 ou la revendication 4, comprenant en outre une unité logique de contrôle (21) couplée aux N microcontrôleurs (19) et / ou à l'unité d'ajout de courant (20) pour configurer l'unité d'ajout de courant afin de produire un courant total maximum disponible pour le dispositif périphérique (12) en fonction de l'énumération.

6. Système (10) selon la revendication 2 ou l'une quelconque des revendications 3 à 5 lorsqu'elle dépend de la revendication 2, dans lequel le port de données d'interface hôte (18) est conçu pour être couplé à un port de données hôte (28) sur le dispositif hôte (14) pour échanger les données entre le dispositif hôte et le dispositif périphérique (12) ; et dans lequel le système comprend en outre un terminal de données (22) conçu pour être couplé au dispositif périphérique pour échanger des données entre le dispositif hôte et le dispositif périphérique via le port de données d'interface hôte.

7. Procédé d'alimentation d'un dispositif périphérique (12) avec un dispositif hôte (14), le procédé comprenant les étapes consistant à :
fournir un système d'interface (10) comprenant N ports d'alimentation d'interface hôte (16), N étant un nombre entier supérieur à un, et une borne d'alimentation (24) ;
connecter chacun des N ports d'alimentation d'interface hôte à un port hôte (26) correspondant sur le dispositif hôte pour livrer l'énergie au dispositif périphérique ;
le système d'interface ajoutant le courant reçu du dispositif hôte via les N ports d'alimentation d'interface hôte pour produire un courant total ; et
connecter la borne d'alimentation au dispositif périphérique pour envoyer le courant total du système d'interface au dispositif périphérique.

8. Procédé selon la revendication 7, dans lequel le système est muni d'un port de données d'interface hôte (18).

9. Procédé selon la revendication 7 ou la revendication 8, dans lequel le système d'interface (10) comprend N microcontrôleurs (19), le procédé comprenant en outre le couplage de chaque microcontrôleur à un port correspondant parmi les N ports d'alimentation d'interface hôte (16) pour l'énumération.

10. Procédé selon la revendication 9, comprenant en outre l'énumération des N microcontrôleurs (19) par le dispositif hôte (14) via les N ports d'alimentation d'interface hôte (16).

11. Procédé selon l'une quelconque des revendications 7 à 10, comprenant en outre la configuration d'une unité d'ajout de courant (20) du système d'interface (10) pour produire un courant total maximum disponible pour le dispositif périphérique (12).

12. Procédé selon la revendication 9 ou la revendication 10, comprenant en outre la communication du dispositif hôte (14) avec les N microcontrôleurs (19) sous une norme bus série universel.

13. Procédé selon la revendication 8 ou l'une quelconque des revendications 9 à 12 lorsqu'elle dépend de la revendication 8, dans lequel le système d'interface (10) comprend en outre un terminal de données (22), le procédé comprenant en outre :
la connexion du port de données d'interface hôte (18) à un port de données hôte (28) sur le dispositif hôte (14) afin d'échanger les données entre le dispositif hôte et le dispositif périphérique (12) ; et
la connexion du terminal de données (22) au dispositif périphérique pour échanger des données entre le dispositif hôte et le dispositif périphérique via le port de données d'interface hôte.

14. Combinaison d'un dispositif hôte (14) et d'un dispositif périphérique (12), lesdits dispositif hôte et dispositif périphérique étant couplés l'un à l'autre par le système (10) de l'une quelconque des revendications 1 à 6.

15. Combinaison selon la revendication 14, dans lequel le dispositif hôte consiste en un ordinateur et le dispositif périphérique consiste en un élément quelconque parmi un téléphone cellulaire, un assistant personnel numérique ou une imprimante.

16. Support lisible par ordinateur comprenant un moyen de codage de programme destiné à un contrôleur logique et / ou aux microcontrôleurs (19) du système (10) selon l'une quelconque des revendications 1 à 6, ledit moyen de codage de programme, lorsqu'il est exécuté, faisant mettre en oeuvre par le système le procédé selon l'une quelconque des revendications 7 à 13.

17. Système (10) d'alimentation d'un dispositif périphérique (12) avec un dispositif hôte (14), le système comprenant :
N ports d'alimentation d'interface hôte (16), N étant un nombre entier supérieur à zéro, et un port de données d'interface hôte (18), chacun desdits N ports d'alimentation d'interface hôte et ledit port de données d'interface hôte étant conçus pour être couplés à un port hôte (26, 28) correspondant sur le dispositif hôte pour livrer l'énergie au dispositif périphérique ;
une unité d'ajout de courant (20) destinée à ajouter du courant reçu du dispositif hôte via les N ports d'alimentation d'interface hôte (16) et le port de données d'interface hôte (18) pour produire un courant total ; et
une borne d'alimentation (24) conçue pour être couplée au dispositif périphérique pour envoyer le courant total de l'unité d'ajout de courant au dispositif périphérique.

18. Système (10) selon la revendication 17, dans lequel N est un nombre entier supérieur à un.

19. Système (10) selon la revendication 17 ou la revendication 18, comprenant en outre N microcontrôleurs (19), chaque microcontrôleur étant couplé à un port correspondant parmi les N ports d'alimentation d'interface hôte (16), dans lequel les N microcontrôleurs sont conçus pour communiquer avec le dispositif hôte (14) pour l'énumération.

20. Système (10) selon la revendication 19, dans lequel les N microcontrôleurs (19) sont conçus pour communiquer avec le dispositif hôte (14) sous une norme bus série universel (USB).

21. Système selon la revendication 19 ou la revendication 20, comprenant en outre une unité logique de contrôle (21) couplée aux N microcontrôleurs (19) et/ou à l'unité d'ajout de courant (20) pour configurer l'unité d'ajout de courant afin de produire un courant total maximum disponible pour le dispositif périphérique (12) en fonction de l'énumération.

22. Système (10) selon l'une quelconque des revendications 17 à 21, dans lequel le port de données d'interface hôte (18) est conçu pour être couplé à un port de données hôte (28) sur le dispositif hôte (14) pour échanger des données entre le dispositif hôte et le dispositif périphérique (12) ; et dans lequel le système comprend en outre un terminal de données (22) conçu pour être couplé au dispositif périphérique pour échanger des données entre le dispositif hôte et le dispositif périphérique via le port de données d'interface hôte.

23. Procédé d'alimentation d'un dispositif périphérique (12) avec un dispositif hôte (14), le procédé comprenant les étapes consistant à :
fournir un système d'interface (10) comprenant N ports d'alimentation d'interface hôte (16), N étant un nombre entier supérieur à zéro, un port de données d'interface hôte (18) et une borne d'alimentation (24) ;
connecter chacun des N ports d'alimentation d'interface hôte (16) et le port de données d'interface hôte (18) à un port hôte (26, 28) correspondant sur le dispositif hôte pour livrer l'énergie au dispositif périphérique ;
le système d'interface ajoutant le courant reçu du dispositif hôte via les N ports d'alimentation d'interface hôte (16) et le port de données d'interface hôte (18) pour produire un courant total ; et
connecter la borne d'alimentation au dispositif périphérique pour envoyer le courant total du système d'interface au dispositif périphérique.

24. Procédé selon la revendication 23, comprenant en outre la fourniture au système d'interface (10) de N ports d'alimentation d'interface hôte (16), N étant un nombre entier supérieur à un.

25. Procédé selon la revendication 23 ou la revendication 24, dans lequel le système d'interface (10) comprend N microcontrôleurs (19), le procédé comprenant en outre le couplage de chaque microcontrôleur à un port correspondant parmi les N ports d'alimentation d'interface hôte (16) pour l'énumération.

26. Procédé selon la revendication 25, comprenant en outre l'énumération des N microcontrôleurs (19) par le dispositif hôte (14) via les N ports d'alimentation d'interface hôte (16).

27. Procédé selon l'une quelconque des revendications 23 à 26, comprenant en outre la configuration d'une unité d'ajout de courant (20) du système d'interface (10) pour produire un courant total maximum disponible pour le dispositif périphérique (12).

28. Procédé selon la revendication 25 ou la revendication 26, comprenant en outre la communication du dispositif hôte (14) avec les N microcontrôleurs (19) sous une norme bus série universel.

29. Procédé selon l'une quelconque des revendications 23 à 28, dans lequel le système d'interface (10) comprend en outre un terminal de données (22), le procédé comprenant en outre :
la connexion du port de données d'interface hôte (18) à un port de données hôte (28) sur le dispositif hôte (14) afin d'échanger les données entre le dispositif hôte et le dispositif périphérique (12) ; et
la connexion du terminal de données (22) au dispositif périphérique pour échanger des données entre le dispositif hôte et le dispositif périphérique via le port de données d'interface hôte.

30. Combinaison d'un dispositif hôte (14) et d'un dispositif périphérique (12), lesdits dispositif hôte et dispositif périphérique étant couplés l'un à l'autre par le système (10) de l'une quelconque des revendications 17 à 22.

31. Combinaison selon la revendication 30, dans lequel le dispositif hôte consiste en un ordinateur et le dispositif périphérique consiste en un élément quelconque parmi un téléphone cellulaire, un assistant personnel numérique ou une imprimante.

32. Support lisible par ordinateur comprenant un moyen de codage de programme destiné à un contrôleur logique et / ou aux microcontrôleurs (19) du système (10) selon l'une quelconque des revendications 17 à 22, ledit moyen de codage de programme, lorsqu'il est exécuté, faisant mettre en oeuvre par le système le procédé selon l'une quelconque des revendications 23 à 29.
